# EUROPEAN PATENT SPECIFICATION

(11) **EP 2 474 448 B1**
(45) Date of publication and mention of the grant of the patent: **30.09.2015**
(21) Application number: 10813182.2
(22) Date of filing: 27.08.2010
(51) Int. Cl.: B60R 1/04, B60R 1/08, G02B 5/08, G02F 1/13

(54) **IMPROVEMENT TO INTERNAL REARVIEW MIRROR**
VERBESSERTER INNENRÜCKSPIEGEL
AMÉLIORATION APPORTÉE À UN RÉTROVISEUR INTÉRIEUR

(30) Priority: 04.09.2009 BR PI0903282
(43) Date of publication of application: 11.07.2012
(73) Proprietor: Metagal Industria E Comércio Ltda., Cep: 37540-000 (BR)
(72) Inventor: MIYABUKURO, Pedro Takashi, CEP 09090 - 521 - Santo André, Estado de São Paulo (BR)
(74) Representative: Murgatroyd, Susan Elizabeth
(86) International application number: PCT/BR2010/000287
(87) International publication number: WO 2011/026205

(56) References cited:
- JP-A- 59 162 501
- JP-A- 59 162 501
- JP-A- 60 177 301
- JP-A- 61 156 030
- JP-A- 61 156 030
- JP-A- 62 089 934
- JP-A- 62 089 934
- JP-A- 2007 083 985
- US-A- 4 669 827
- US-A1- 2002 154 379
- US-A1- 2003 086 192

## Description

The present invention relates to an interior rearview mirror system pertaining to the field of motor vehicle accessories, and which has been improved to be provided with an automatic anti-dazzle system.

Motor vehicle interior rearview mirrors are already known as being essentially comprised by: a mirror plate, which focuses the region behind the vehicle; a frame which houses the mirror plate featuring a rearward support mounted in the middle of the windshield upper part or in the ceiling of the vehicle compartment near the middle of the windshield upper side; a mechanism for adjusting the position of the frame and/or mirror plate; and occasionally, other associated mechanisms, such as courtesy light or others. A drawback to the usual inner rearview mirrors is that it is struck by the headlight of other vehicles coming from behind and reflects it to the driver's eyes, thereby dimming his view which may cause accidents. Anti-dazzle devices have already been disclosed to overcome such drawback. While the existing anti-dazzle devices perform their function, studies have been continuously carried out in order to improve them to work without interfering, or even cooperating with the other functions that have more recently been incorporated to rearview mirrors.

US2002/0154379 A1 which shows the preamble of claim 1, discloses a rearview mirror including an LED or OLED display for information over a portion of the mirror surface. It includes a control circuit to control the ratio of light originating from the display and light reflecting from the mirror, depending on whether it is daytime or night time. It uses electrochromic materials to provide an anti-dazzle effect.

US2003/0086192 A1 discloses a mirror in which an OLED display for information may overlie the entire surface of the mirror.

Therefore, the object of the present patent of invention is to provide an improved interior rearview mirror incorporating an automatic anti-dazzle system that is both effective in accomplishing its primary purpose and causing no interference, and even cooperating with other functions more recently incorporated to interior rearview mirrors, such as television sets or DVD players, reverse gear sensor and others.

Another object of the invention is to provide a rearview mirror incorporating an automatic anti-dazzle system that besides providing the above advantages will not require high level of construction or manufacturing complexity that makes it unattractive.

Another object of the invention is to provide a low cost rearview mirror incorporating an anti-dazzle system.

Accordingly, the present invention consists in an interior rearview mirror comprising: a flat mirror plate; a frame and support assembly containing the flat mirror plate for mounting in a suitable location in a vehicle; and occasionally associated with other devices, such as: courtesy light, position adjustment mechanism; entertainment devices, such as television set, DVD player, image sensors and others; an OLED (Organic Light Emitting Diode) film overlying the surface of the flat mirror; a sensor that senses day and night; a light sensor that senses a headlight coming from behind the vehicle; an on-off button; and an automatic anti-dazzle system provided by a processing circuit arranged to cause a decrease in reflectance of the flat mirror plate when the interior rearview mirror senses, via the light sensor, the headlight coming from behind the vehicle; whereby said OLED film overlies the entire surface of the flat mirror plate; and in that said OLED film is arranged to be activated by said processing circuit to effect said decrease in reflectance when the headlight is sensed by said light sensor.

In view of the aforementioned aspects and objects and in order to achieve their accomplishment, an improved interior rearview mirror is disclosed herein, whose construction, functioning and advantages are described below based on the attached drawings, in which:
Figs. 1 and 2 show side and front views of the mirror incorporating the automatic anti-dazzle system of the invention;
Fig. 3 shows a schematic view of two vehicles interacting and the actuation of the automatic anti-dazzle system of the interior rearview mirror; and
Fig. 4. shows a diagram of functions of the interior rearview mirror system incorporating the anti-dazzle system of the invention.

According to the drawings, the interior rearview mirror 1 object of this patent of invention is intended to perform its usual function, i.e. displaying the region behind the vehicle to the driver when this latter is driving or maneuvering the vehicle; the mirror is essentially comprised by: a 2 mm thick, flat, silver or aluminum metallized mirror plate 2, which focuses the region behind the vehicle and has a rated reflectance of 70%; a frame and support assembly 3 containing the flat mirror plate 2, and which is mounted in the middle of the windshield upper region or ceiling of the compartment near the upper central region of the windshield of the vehicle 100; and which is occasionally associated with other devices, such as: courtesy light, position adjustment mechanism; entertainment devices, such as television set, DVD player, image sensors and others (not shown).

The improvement to the present invention comprises providing the above interior rearview mirror with an automatic anti-dazzle system 10 being essentially comprised by: an OLED (Organic Light Emitting diode) film 11 overlying the entire surface of the flat mirror 2 such that images captured by the mirror are displayed through it; a sensor 12 that senses day and night; a light sensor 13 that senses headlights coming from behind; an on-off button 14 associated with a processing circuit 15 preferably inside the interior rearview mirror.

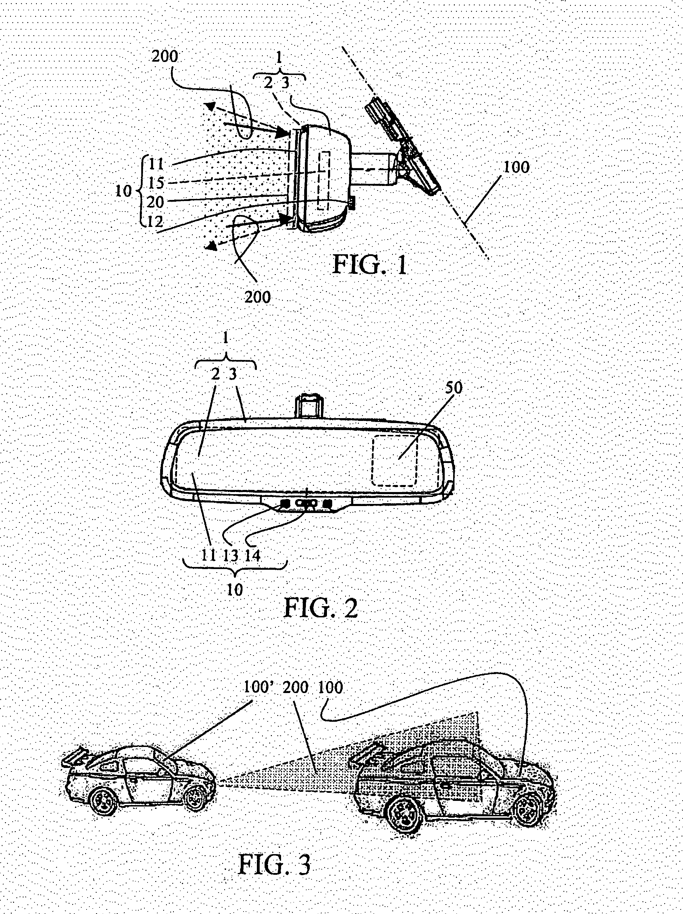

The interior rearview mirror with the above anti-dazzle system 10 works as follows: As the interior rearview mirror 2 reflects the headlight 200 (fig. 3) from another vehicle 100' behind the vehicle 100, the OLED film 11 overlying the entire surface of the flat mirror 2 is actuated for attenuating the headlight passing to the mirror 2.

As a consequence, the anti-dazzle system 10 is actuated as the mirror is struck by the headlight, causing the OLED film 11 to respond by decreasing the typical reflectance from 70% to 30%, thus preventing the driver's view from being dimmed by the headlight reflection.

If the headlight is no longer sensed, the system 10 is switched off, the OLED film 11 becomes responsive and returns to the initial situation, causing the mirror to resume its 70% reflectance.

In the absence of headlight, the OLED film 11 can be manually actuated by means of the on-off button 14 to view images from cameras, sensor messages and images displayed in a predetermined region 50 of the mirror surface 2. Under specific operation conditions, when the vehicle is off and the interior rearview mirror is operating as a display, the OLED 11 can operate as a monitor and receive the signal from an entertainment system (DVD player, television set, others) installed in the vehicle.

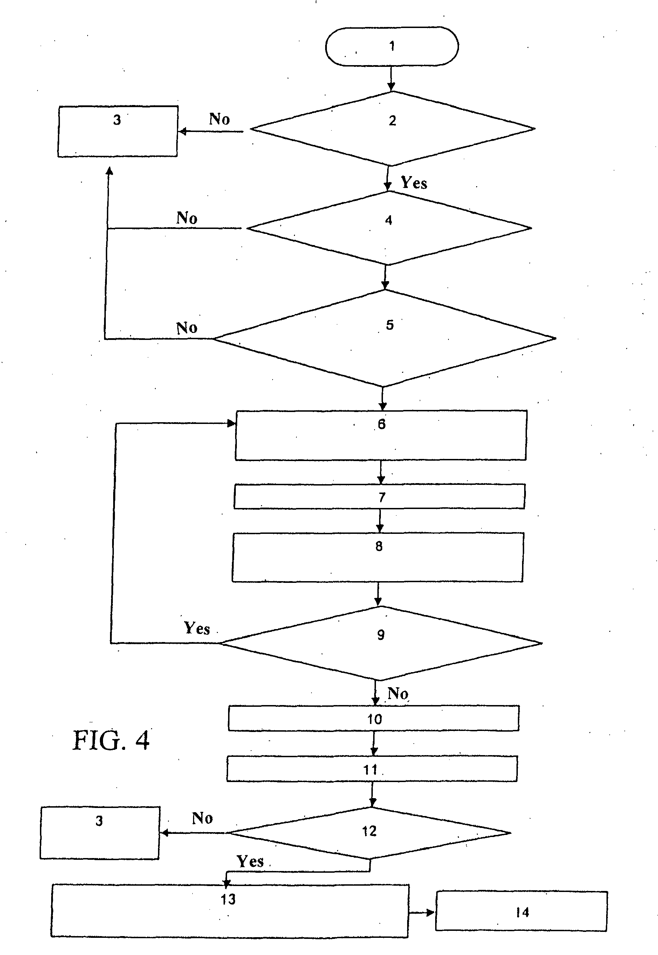

The system is comprised by: an interior rearview mirror 1 incorporating the OLED film 11 based automatic anti-dazzle system 10 of the present invention, whose parts are arranged to have the functional characteristics depicted in the flowchart shown in figure 4:
- Start - BLOCK 1;
- Is it night and is the ignition on? BLOCK 2. No, it comprises: Stand-by system - BLOCK 3. Yes, it comprises: Actuation of the on/off button BLOCK 4;
- Actuation of the on/off button BLOCK 4. No, it comprises Stand-by system - BLOCK 3. Yes, it comprises: Headlight coming from behind the vehicle sensed? BLOCK 5. No, it comprises: Stand-by system - BLOCK 3. Yes, it comprises: Light passing through the OLED film BLOCK 6;
- Light passing through the OLED film BLOCK 6 comprises Anti-dazzle system activated BLOCK 7 comprises Reduction of the mirror reflectance from 70% to 30% BLOCK 8;
- No headlight from behind in the mirror? BLOCK 9. Yes, it comprises: Light passing through the OLED film BLOCK 6. No, it comprises: Increased reflectance BLOCK 10 comprises: Reflectance returning to 70% BLOCK 11;
- Is the ignition off? BLOCK 12. No, it comprises: Stand-by system - BLOCK 3. Yes, it comprises: OLED film activated to allow watching videos, images, etc. (entertainment) BLOCK 13;
- End - BLOCK 14.

According to the basic construction described above, the interior rearview mirror and automatic anti-dazzle system incorporated thereto, object of the present invention may be subject to changes in materials, dimensions, constructive details and/or functional and/or ornamental configuration without departing from the scope of the protection claimed.

The above disclosure further includes a transparent sheet of glass 20 that can be optionally arranged on the OLED film 11 to protect it.

## Claims

1. An interior rearview mirror comprising: a flat mirror plate (2); a frame and support assembly (3) containing the flat mirror plate (2) for mounting in a suitable location in a vehicle (100); an OLED (Organic Light Emitting Diode) film (11) overlying the surface of the flat mirror (2); a sensor (12) that senses day and night; a light sensor (13) that senses a headlight coming from behind the vehicle (100); an on-off button (14); and an automatic anti-dazzle system (10) provided by a processing circuit (15) arranged to cause a decrease in reflectance of the flat mirror plate (2) when the interior rearview mirror senses, via the light sensor (13), the headlight coming from behind the vehicle (100); **characterized in that** said OLED film (11) overlies the entire surface of the flat mirror plate(2); and **in that** said OLED film (11) is arranged to be activated by said processing circuit (15) to effect said decrease in reflectance when the headlight is sensed by said light sensor (13).

2. The interior rearview mirror, according to claim 1, **characterized in that** the flat mirror (2) has a 70% rated reflectance.

3. The interior rearview mirror, according to claim 1 or 2, **characterized in that** the anti-dazzle system (10) activates the OLED film (11) to decrease the flat mirror (2) reflectance from 70% to 30%.

4. The interior rearview mirror, according to claim 1, 2 or 3, **characterized in that** the OLED film (11) can be manually actuated by means of the on-off button (14), thus allowing viewing images from cameras, sensor message and images from entertainment systems: Television sets, DVD players or others or image sensors of the vehicle safety systems or others displayed in a predetermined region of the mirror surface (2).

5. The interior rearview mirror, according to any preceding claim, **characterized in that** a protective transparent sheet of glass (2) is provided on the OLED film (11).

## Patentansprüche

1. Ein innerer Rückspiegel umfassend: eine flache Spiegelplatte (2); eine Rahmen- und Stützanordnung (3) enthaltend die flache Spiegelplatte (2) zum Montieren in einer passenden Stelle in einem Fahrzeug (100); einen OLED(Organic Light Emitting Diode)-Film (11) überlagernd die Oberfläche des flachen Spiegels (2); einen Sensor (12), welcher Tag und Nacht erkennt; einen Lichtsensor (13), welcher einen von hinter dem Fahrzeug (100) kommenden Scheinwerfer erkennt; einen An-Aus-Knopf (14); und ein automatisches Anti-Blend-System (10) bereitgestellt durch einen Verarbeitungsschaltkreis (15) dazu eingerichtet, eine Verringerung in der Reflektanz der flachen Spiegelplatte (2) zu verursachen, wenn der innere Rückspiegel über den Lichtsensor (13) den von hinter dem Fahrzeug (100) kommenden Scheinwerfer erkennt; **dadurch gekennzeichnet, dass** der OLED-Film (11) die gesamte Oberfläche der flachen Spiegelplatte (2) überlagert; und dass der OLED-Film (11) dazu eingerichtet ist, von dem Verarbeitungsschaltkreis (15) aktiviert zu werden, um die Verringerung in der Reflektanz herbeizuführen, wenn der Scheinwerfer von dem Lichtsensor (13) erkannt wird.

2. Der innere Rückspiegel gemäß Anspruch 1, **dadurch gekennzeichnet, dass** der flache Spiegel (2) eine mit 70% bewertete Reflektanz hat.

3. Der innere Rückspiegel gemäß Anspruch 1 oder 2, **dadurch gekennzeichnet, dass** das Anti-Blend-System (10) den OLED-Fihn (11) aktiviert, um die Reflektanz des flachen Spiegels (2) von 70% auf 30% zu verringern.

4. Der innere Rückspiegel gemäß den Ansprüchen 1, 2 oder 3, **dadurch gekennzeichnet, dass** der OLED-Film (11) manuell mittels des An-Aus-Knopfes (14) betrieben werden kann, was das Betrachten von in einer vorbestimmten Region der Spiegeloberfläche (2) angezeigten Bildern von Kameras, Sensornachrichten und Bildern von Unterhaltungssystemen: Fernsehgeräten, DVD Spielern oder andere oder Bildsensoren des Fahrzeugsicherheitssystems oder andere zulässt.

5. Der innere Rückspiegel gemäß einem vorherigen Anspruch, **dadurch gekennzeichnet, dass** eine schützende transparente Scheibe Glas (2) auf dem OLED-Film (11) vorgesehen ist.

## Revendications

1. Rétroviseur intérieur comprenant : une plaque de miroir plate (2) ; un ensemble de bâti et de support (3) contenant la plaque de miroir plate (2) pour un montage en un emplacement adapté dans un véhicule (100) ; un film de DELO (diode électroluminescente organique) (11) recouvrant la surface du miroir plat (2) ; un capteur (12) qui détecte le jour et la nuit ; un capteur de lumière (13) qui détecte un phare avant provenant de l'arrière du véhicule (100) ; un bouton marche/arrêt (14) ; et un système antireflet automatique (10) fourni par un circuit de traitement (15) agencé pour provoquer une diminution du facteur de réflexion de la plaque de miroir plate (2) lorsque le rétroviseur intérieur détecte, via le capteur de lumière (13), le phare avant provenant de l'arrière du véhicule (100) ; **caractérisé en ce que** ledit film de DELO (11) recouvre la surface entière de la plaque de miroir plate (2) ; et **en ce que** ledit film de DELO (11) est agencé pour être activé par ledit circuit de traitement (15) afin d'effectuer ladite diminution du facteur de réflexion lorsque le phare avant est détecté par ledit capteur de lumière (13).

2. Rétroviseur intérieur selon la revendication 1, **caractérisé en ce que** le miroir plat (2) a un facteur de réflexion nominal de 70 %.

3. Rétroviseur intérieur selon la revendication 1 ou 2, **caractérisé en ce que** le système antireflet (10) active le film de DELO (11) pour abaisser le facteur de réflexion du miroir plat (2) de 70 % à 30 %.

4. Rétroviseur intérieur selon la revendication 1, 2 ou 3, **caractérisé en ce que** le film de DELO (11) peut être activé manuellement au moyen du bouton marche/arrêt (14), permettant ainsi de visualiser des images provenant de caméras, un message de capteur et des images provenant de systèmes de divertissement : téléviseurs, lecteurs DVD ou autres ou de capteurs d'image des systèmes de sécurité du véhicule ou autres affichés dans une région prédéterminée de la surface de miroir (2).

5. Rétroviseur intérieur selon l'une quelconque des revendications précédentes, **caractérisé en ce qu'**une feuille transparente de protection en verre (2) est ménagée sur le film de DELO (11).
